# EUROPÄISCHE PATENTSCHRIFT

(11) **EP 2 470 327 B1**
(45) Veröffentlichungstag und Bekanntmachung des Hinweises auf die Patenterteilung: **03.08.2016**
(21) Anmeldenummer: 10782683.6
(22) Anmeldetag: 31.08.2010
(51) Int. Cl.: B23Q 1/25, H01L 31/048, B32B 17/10, B32B 37/12

(54) **VERFAHREN UND VORRICHTUNG ZUM BLASENFREIEN VERKLEBEN GROßFLÄCHIGER GLASPLATTEN**
METHOD AND DEVICE FOR THE BUBBLE-FREE BONDING OF LARGE-SURFACE GLASS PANES
PROCÉDÉ ET DISPOSITIF PERMETTANT LE COLLAGE DE PLAQUES DE VERRE DE GRANDE SURFACE SANS FORMATION DE BULLES

(30) Priorität: 25.08.2009 DE 102009038799
(43) Veröffentlichungstag der Anmeldung: 04.07.2012
(73) Patentinhaber: Grenzebach Maschinenbau GmbH, 86663 Asbach-Bäumenheim (DE)
(72) Erfinder: RITZKA, Wolfgang, 86672 Thierhaupten (DE)
(74) Vertreter: Kindermann, Peter
(86) Internationale Anmeldenummer: PCT/IB2010/002722
(87) Internationale Veröffentlichungsnummer: WO 2011/024083

(56) Entgegenhaltungen:
- WO-A1-03/031173
- AT-U1- 296
- DE-A1- 2 310 502
- DE-A1- 2 728 762
- DE-A1- 3 539 877
- DE-A1- 19 836 694
- DE-C1- 4 335 673
- DE-U1-202007 015 168
- JP-A- 5 238 782
- JP-A- 5 294 682
- JP-A- 7 126 044

## Beschreibung

Die Erfindung betrifft ein Verfahren und eine Vorrichtung zum blasenfreien Verkleben großflächiger Glasplatten. Ein Anwendungsgebiet für solche Glasplatten ist die Herstellung von Solarmodulen. Solarmodule bestehen in der Regel aus einer photosensitiven Halbleiterschicht, die zum Schutz gegen äußere Einflüsse mit einer transparenten Abdeckung versehen werden. Die einzelnen Solarzellen-Einheiten werden zu diesem Zweck meist zwischen eine Glasscheibe und eine biegefeste hintere Abdeckplatte, z.B. aus Glas mit der Hilfe einer Klebfolie oder eines Klebers laminiert. Der transparente Kleber muss Solarzellen-Einheiten vollständig umschließen, UV-stabil sein und nach dem Laminierprozess vollständig blasenfrei sein.

Da die Solarzellen-Einheiten äußerst bruchempfindlich sind, werden als transparente Kleber häufig aushärtende Gießharze oder vernetzbare Ethylenvinylacetat (EVA) basierende Systeme eingesetzt. Diese Klebesysteme können in ungehärtetem Zustand so niedrigviskos eingestellt werden, dass sie die Solarzellen-Einheiten blasenfrei umschließen. Nach Zugabe eine Härters oder eines Vernetzungsmittels wird eine mechanisch widerstandsfähige Klebeschicht erhalten. Nachteilig an solchen Solarmodulen ist deren aufwändige Herstellung. Insbesondere bei großflächigen Fassadenelementen ist die Einbettung der Solarzellen-Einheiten in das flüssige Gießharz und dessen kontrollierte Aushärtung ein schwierig zu kontrollierender Prozess. Zudem neigen einige Gießharze nach einigen Jahren zur Blasenbildung bzw. zur Delamination.

In der DE 199 50 893 C2 ist ein Solarmodul mit einer Randversiegelung beschrieben. Dieses Solarmodul soll eine noch weiter verbesserte Abdichtung eines Dünnschicht-Bauelementes mit einer Chalkopyrit-Absorberschicht als beim Stand der Technik angeben. Eine solche Chalkopyrit-Absorberschicht dient in Verbindung mit einem Trockenmittel dazu das Absorbieren von Feuchtigkeit zu ermöglichen und eine klimastabile Verkapselung von Solarmodulen zu schaffen.

Hierzu besteht bei einem Solarmodul mit zwischen zwei Platten angeordneten und mit einer Gießmasse versiegelten Dünnschicht-Solarzellen, mit einer am äußeren Rand der Platten angeordneten Randversiegelung aus einem Abstandhalter und wenigstens einem abschnittsweise außen auf diesem aufgetragenen Klebestrang, und mit aus dem von den Platten umschlossenen Raum nach außen geführten Anschlüssen der Solarzellen der Abstandshalter aus einem mit einem Feuchtigkeit absorbierenden Mittel versehen Elastomerstrang, wobei der Klebestrang den Elastomerstrang außen umlaufend umgibt. Dieses Verfahren eignet sich jedoch nur für die Herstellung relativ kleiner Solarmodule.

Aus der DE 101 22 437 A1 ist ein Schmelzklebstoff in Form eines Granulats bekannt, wobei angesichts des dort angeführten Standes der Technik einkomponentige feuchtigkeitsreaktive Schmelzklebstoff-Zusammensetzungen bereitgestellt werden sollen, die in riesel- oder schüttfähiger Form herstellbar und anwendbar sind.

In dieser Druckschrift ist weiter ein Verfahren zum Verbinden von flächigen Gebilden oder Formteilen beschrieben mit den folgenden Verfahrensschritten:
a) Homogenisieren und Aufschmelzen des reaktiven Granulats Pulvers ,ggf in einer inerten Atmosphäre unter Ausschluss von Feuchtigkeit und / oder Sauerstoff unter Verwendung eine heizbaren Mischaggregats ggf. mit hoher Scherung,
b) Extrusion des homogenisierten reaktiven thermoplastischen Gemisches ggf. durch eine formgebende Düse auf mindestens eine Oberfläche eines Flächengebildes oder Formteils,
c) Fügen eines zweiten dazu passenden Flächengebildes oder Formteils auf die aufgebrachte Schicht des reaktiven Gemisches ,
d) ggf. mechanisches Fixieren der gefügten Flächengebilde oder Formteile,
e) Abkühlen des so gebildeten Verbundsystems auf Raumtemperatur, wobei die reaktive Schmelzklebstoff - Zusammensetzung erstarrt und unter Vernetzung aushärtet.

Die hierbei in Betracht gezogenen Gebilde oder Formteile sind Holz- oder Möbelteile, Textilien und Fahrzeugteile, aber auch Solarkollektoren. Hinweise auf die besonderen Anforderungen wie sie bei dem blasenfreien Verkleben großflächiger Glasscheiben auftreten, finden sich hier jedoch nicht.

In der DE 27 28 762 A1 sind ein Verfahren und eine Vorrichtung zur Herstellung einer Verbundglasscheibe sowie eine danach hergestellte Verbundglasscheibe beschrieben, die insbesondere als Schallschutzscheibe dienen soll. Im Wesentlichen wird hier ein Verfahren unter Schutz gestellt mit dem zwei mit Abstand zueinander angeordnete Scheiben ohne Lufteinschlüsse mit einem flüssigen Kunststoff aufgefüllt werden.

Aus der DE 198 36 694 A1 ist ein Verfahren zur Herstellung von Verbundglas bekannt, das unter Berücksichtigung spezieller Klebstoff - Eigenschaften mit wenigen Verfahrensschritten und ohne Randabdichtung arbeitet.

In der DE 20 2007 015 168 U1 ist eine Vorrichtung zur kontaminationsfreien Behandlung stoßempfindlicher Glasplatten in Reinsträumen beschrieben, die ohne den Zutritt von Menschen gesteuert wird und wobei die Bewegungsabläufe der Glasplatten unerwünschte Schwingungen ausschließen.

Die WO 03/031173 A1 betrifft ein Verfahren und eine Vorrichtung zum Befüllen von Hohlräumen zwischen zwei Glasscheiben eines Brandschutzverbundglases, bei dem im Wesentlichen sowohl der Strang aus Abstandsisoliermaterial wie auch der Strang aus Dichtungsmaterial automatisch und vollständig umlaufend aufgebracht werden können und keine Fremdkörper in den Hohlraum zwischen den Glasscheiben gelangen.

In der JP 7 126 044 A ist ein mit wasserhaltigem Gel gefülltes spannungsfreies Brandschutzglas beschrieben.

Die JP 5 294 682 A betrifft ein Brandschutzglas, bei dem der Zwischenraum zwischen zwei Glasstrukturen blasenfrei mit Hydrogel verfüllt und beidseitig mit UV -Licht bestrahlt wurde.

Aus der DE 10 2006 007 472 A1 ist ein photovoltaisches Konzentratormodul mit Multifunktionsrahmen bekannt. Das photovoltaische Konzentratormodul soll kostengünstig hergestellt werden können, langlebig sein und es soll es erlauben einfach und flexibel zusätzliche Komponenten zu integrieren, die auf der Linsenplatte oder der Bodenplatte nicht oder nur schwierig untergebracht werden können. Darüber hinaus soll ein Verfahren entwickelt werden, das die Herstellung solcher Konzentratormodule ermöglicht. Bei diesem Verfahren wird ein Rahmen, eine Linsenplatte und eine Bodenplatte verbindend, längs dem Rand der Linsenplatte und der Bodenplatte angeordnet, und zwischen den Rahmen und die Linsenplatte und/oder den Rahmen und die Bodenplatte wird zum einen mindestens eine erste Dichtmasse und/oder Klebemasse und zum anderen mindestens eine zweite Dichtmasse entlang des Rahmens über zumindest einen Teil seiner Länge umlaufend, eingebracht, wobei die beiden Dicht- und/oder Klebemassen sich bezüglich ihrer Aushärtezeiten und/oder Gasdurchlässigkeiten unterscheiden. Auch hier werden zwei Platten miteinander verbunden, jedoch ist kein Hinweis auf die besondere Problematik beim Verbinden großflächiger Glasscheiben zu finden.

Eine Alternative zu aushärtenden Klebesystemen ist der Einsatz von auf Polyvinylbutyral (PVB) basierenden Folien. Hier werden die Solarzellen-Einheiten zwischen PVB-Folien eingebettet und diese unter erhöhtem Druck und erhöhter Temperatur mit den gewünschten Abdeckmaterialien zu einem Laminat verbunden.

Bei diesem Verfahren muss nach dem Verpressen und Erhitzen noch die überstehende Folie entfernt werden. Aus der DE 20 2008 008 794 U1 ist zu diesem Zweck eine Vorrichtung zum Besäumen von photovoltaischen Modulen bekannt.

Des Weiteren ist aus der DE 198 35 695 A1 ein Klebstoff zur Herstellung von Verbundglas bekannt, wobei die Verwendung dieses Klebstoffes in einem Verfahren zur Herstellung von randabdichtungsfreiem Verbundglas beschrieben ist. Zur Herstellung von Verbundglas soll ein Klebstoff geschaffen werden, der sich im fertigen Verbundglas anstelle des Gießharzes zwischen den Glastafeln verbindet, der eine hohe Viskosität aufweist und der den Einsatz eines neuen automatisierten Verfahrens zur randabdichtungsfreien Herstellung von Verbundglas erlaubt.

Das in der DE 198 36 695 A1 beschriebene Verfahren der Verwendung dieses Klebstoffes in einem Verfahren zur Herstellung von Verbundglas weist die folgenden Schritte auf:
a) die Glastafeln werden gereinigt und getrocknet,
b) der Klebstoff wird auf die Innenseite der ersten, waagrecht liegenden Glastafel aufgebracht,
c) die zweite Glastafel wird deckungsgleich auf die Klebstoffschicht aufgelegt,
d) die erhaltene Sandwichanordnung wird verpresst und die Klebstoffschicht durch UV - Bestrahlung ausgehärtet.

Die angeführten Beispiele der Formate der auf diese Weise hergestellten Verbundgläser betragen im Höchstfall 1500 x 1000 mm. Hierbei handelt es sich jedoch nicht um großflächige Glasscheiben im Sinne der Erfindung. Außerdem wurden die beschriebenen Verbundgläser offensichtlich lediglich in Einzelstücken gefertigt.

Der vorliegenden Erfindung liegt deshalb die Aufgabe zugrunde, eine Vorrichtung und ein Verfahren zum blasenfreien Verkleben von großformatigen beschichteten Glasplatten einer Fläche von der Größenordnung 2000 x 3000 mm unter Reinraumbedingungen mit einer abdeckenden weiteren Glasplatte, wobei die Glasplatten schonend und sicher, aber dennoch auf engstem Raum verklebt werden und hohe Taktzeiten bei dem Herstellungsprozess erzielt werden.

Diese Aufgabe wird mit einer Vorrichtung nach Anspruch 1, bzw. einem Verfahren nach Anspruch 5, gelöst.

Weitere vorteilhafte Ausgestaltungen der Erfindung ergeben sich aus den Unteransprüchen. => Seite 5

Die erfindungsgemäße Vorrichtung wird im Folgenden näher beschrieben, Es zeigen dabei im Einzelnen:
- Fig. 1:: eine Übersichts - Ansicht der erfindungsgemäßen Gesamtvorrichtung
- Fig.2 :: eine Darstellung des Kleberauftrags
- Fig. 3:: eine Darstellung des Aufsetzvorgangs einer Deckplatte (20)
- Fig.4:: eine Darstellung des Pressvorgangs
- Fig.5:: eine Darstellung des Entlüftungsvorgangs
- Fig.6:: eine Darstellung des Abtransports des Fertigprodukts

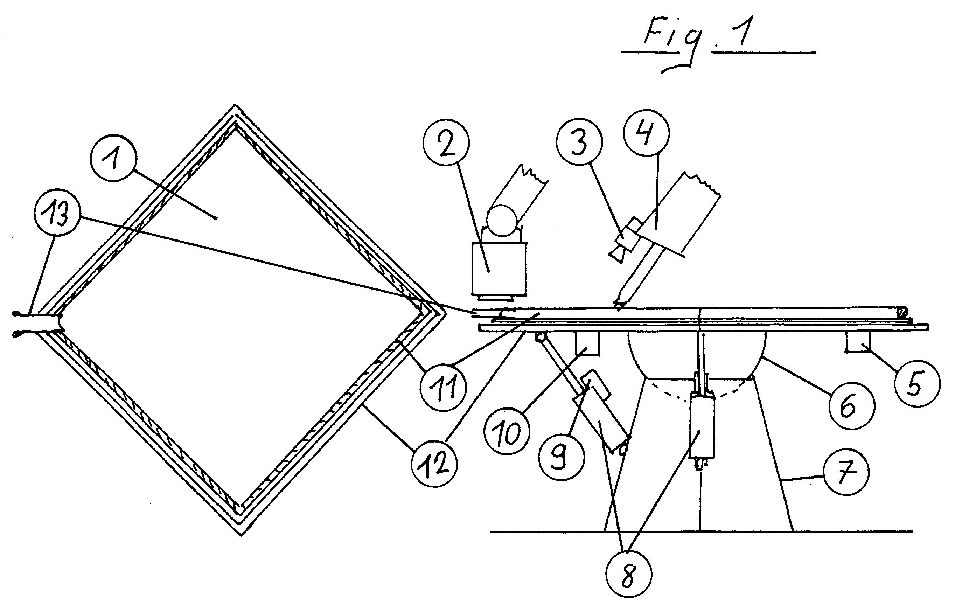

Die Fig.1 zeigt eine Übersichts - Ansicht der erfindungsgemäßen Gesamtvorrichtung. Auf der rechten Bildseite ist ein Tischsockel 7 mit einer auf einr Schwenktischplatte 12 aufliegenden Glasscheibe 1 zu erkennen, wobei die Glasscheibe 1 auf der linken Bildseite in der Draufsicht dargestellt ist. Die Schwenktischplatte 12 ist über ein kalottenförmiges Hauptlager mit einem Tischsockel 7 verbunden. Die Schwenktischplatte 12 ist ferner über Schwenkantriebe 8 mit jeweils einer Hubspindel nach rechts und in der Bildebene nach vorne und hinten stufenlos in der Neigung verstellbar. Die Überwachung, bzw. die Steuerung der Neigung der Schwenktischplatte 12 erfolgt über die Neigungssensoren 9.

Die Glasscheibe 1 liegt, wie in der Draufsicht dargestellt, längs ihrer Diagonale auf der Schwenktischplatte 12 auf und ist mit dieser über eine, nicht gesondert dargestellte, Fixiervorrichtung fest verbunden. Der Randbereich der Glasscheibe 1 ist auf allen Seiten mittels einer streifenförmig aufgetragenen Barriere 11 aus Butyl abgeschlossen. Der Auftrag dieses Streifens aus Butyl erfolgt rechnergesteuert mittels eines Butylauftragskopfes 4. Die Dicke und die Art des Auftrags sowie die exakte Lage der Butylbarriere wird von einer Kamera 3 überwacht, bzw. auf dem Wege der Rückkopplung gesteuert.

Da, wie aus den folgenden Figuren näher zu sehen, die Glasscheibe 1 während oder vor dem Auftrag des Klebers 16 nach rechts gekippt wird, ist ein Entlüftungselement 13 auf der linken Seite, die in der gekippten Stellung höher liegt als die rechte Seite, angebracht. Dieses Entlüftungselement 13 ist in der Fig. 1 in der Draufsicht sowohl in der linken Bildseite am Ende der horizontal dargestellten Diagonale der Glasscheibe 1 als auch im Querschnitt auf der rechten Bildseite zu erkennen. Über diesem Bereich, in dem in der Fig.1 auf der rechten Bildseite das Entlüftungselement 13 gezeigt ist, ist der zugehörige Montagekopf 2 zum Einfügen des Lüftungselements 13 in die beschriebene Butylbarriere 11, dargestellt. Auch dieser Vorgang des Einfügens eines Lüftungselements 13 erfolgt zu gegebenem Zeitpunkt während des Prozesses des Zusammenfügens der Glasscheibe 1 und einer Deckscheibe 20 rechnergesteuert.

Der in der Fig.1 gezeigte Temperatursensor 5 und der Feuchtigkeitssensor 10 dienen der Erfassung von Umgebungsparametern die für die Steuerung des Prozesses der Verklebung notwendig sind.

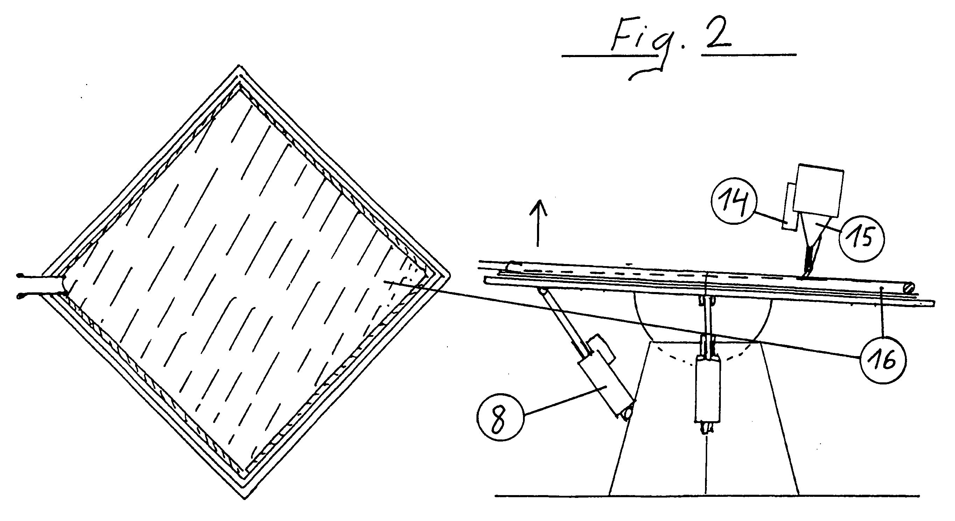

Die Fig.2 zeigt eine Darstellung des Kleberauftrags. Der Kleberauftrag erfolgt nach dem Auftrag der Butylbarriere 11 und der Installation des Entlüftungselements 13. Hierbei wird der Kleber 16 mittels des Kleber- Dosier und Eintragskopfes 15 aufgetragen und der Auftrag über den Prozesskontroll - Sensor 14 überwacht bzw. gesteuert. In der, in der Fig.1 gezeigten, Stellung der Schwenktischplatte 12 ist diese über den linken Schwenkantrieb 8 leicht in der Weise gekippte, dass das Entlüftungselemente 13 gegenüber der gezeigten Position des Kleber - Dosier und Eintragskopfes 15 eine erhöhte Stellung einnimmt. Dies wird in der Fig.2 durch den vertikalen Pfeil aufgezeigt. Die Oberfläche des Klebers 16 ist in dieser Stellung der Schwenktischplatte 12 der Schwerkraft folgend schematisch waagrecht dargestellt und erreicht das Lüftungselement 13 am unteren Rand seiner Austrittsöffnung. Im linken Bildteil ist die Glasplatte 1 von oben vollständig von Kleber 16 benetzt dargestellt, wobei sich ein Großteil des Klebers 16 wegen des Gefälles über die Diagonale der Glasplatte 1 im unteren Teil der Glasplatte 1 befindet.

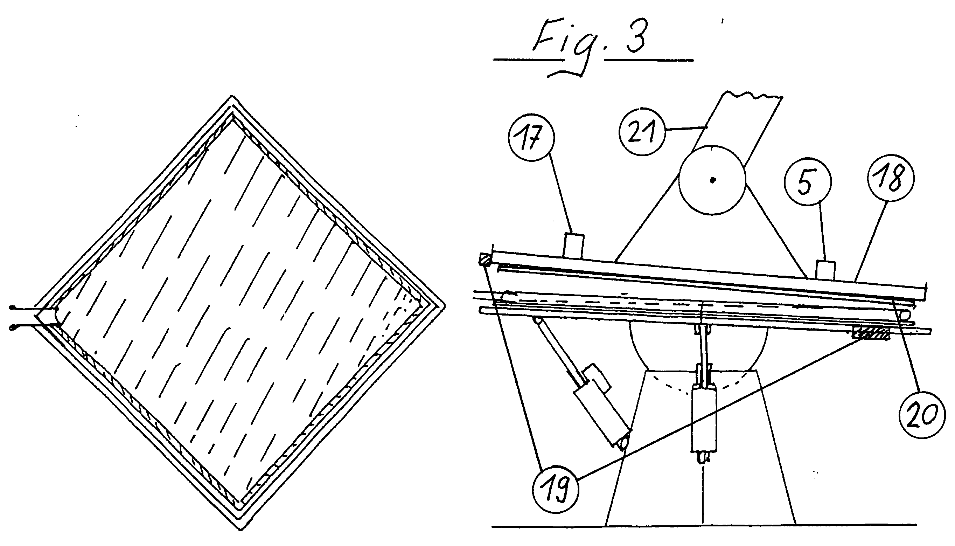

In der Fig.3 ist eine Darstellung des Aufsetzvorgangs einer Deckplatte (20) zu sehen. Zusätzlich zu dem Querschnitt der Fig.2 ist in der Fig.3 ein von einer Greifvorrichtung 21, wie zum Beispiel einem Roboterarm, flächenmäßig ausgebildeter Deckplattengreifer 18 zu erkennen, der an seiner Unterseite eine Deckplatte 20 von oben erfasst hat und auf die Glasplatte 1 aufsetzt. Die Deckplatte 20 ist hinsichtlich der Lage ihrer Diagonalen parallel zur Zeichenebene ebenso orientiert wie die unten liegende Glasplatte 1. Beide Glasplatten 1, 20 beginnen sich somit, von der Greifvorrichtung 21 gesteuert, einander anzunähern, wobei der erste Berührungspunkt beider Glasplatten 1,20 im Bereich des tiefer liegenden Endes der Diagonalen erfolgt. Zur Unterstützung des Vorgangs des exakten Aufeinandersetzens beider Glasplatten 1,20 dienen die dargestellten Kantendetektoren 19. Der Deckplattengreifer 18 senkt sich bei dem beschriebenen Vorgang nicht nur leicht ab sondern verändert hierbei auch seine Neigung in der Weise, dass der Kleber 16 langsam zum höher gelegenen Ende der Diagonalen beider Glasplatten 1,20 befördert wird. Die Butylbarriere 11 sorgt bei diesem Vorgang für die gewünschte Begrenzung des Klebers 16 und seine gleichmäßige Verteilung in der Richtung zu dem Entlüftungselement 13 am höher gelegenen Ende der Diagonalen der beiden Glasplatten 1,20. Ein Ultraschallerzeuger 17 sorgt für die gleichmäßige Verteilung des Klebers 16 und die Auflösung von eventuellen Luftblasen. Der Ultraschallerzeuger 17 steht hierbei für eine besondere Ausbauform der erfindungsgemäßen Vorrichtung, bzw. das grundlegende Verfahren bei der Verteilung von Kleber 16 begleitend mit dem Fortschreiten der "Kleberfront" durch die sich nähernde Deckplatte 20 eine punktuelle und / oder linienförmige Applikation von Ultraschall einzusetzen.

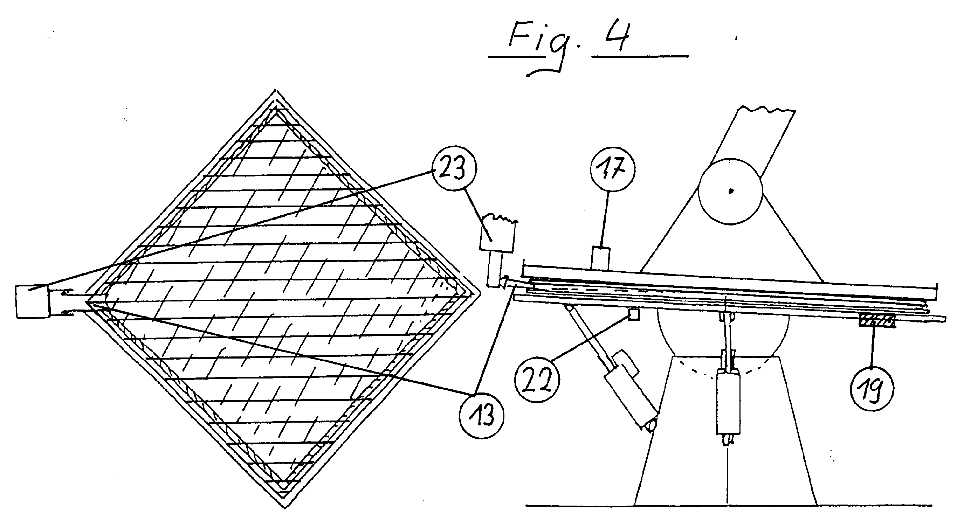

Die Fig.4 zeigt eine Darstellung des Pressvorgangs. Zusätzlich zu dem Ultraschallerzeuger 17. wie er auch in der Fig.3 beschrieben ist, ist hier ein Ultraschall - Mess - Sensor 22 zur Messung der Dicke der Kleberschicht vorgesehen. Denn durch das Zusammendrücken der Butylbarriere 11 in der Folge der Näherungs - Bewegung der Deckplatte 20 zu der Glasplatte 1 wird auch die gewünschte Schichtdicke des Klebers 16 eingestellt, die von dem Sensor 22 ermittelt und als Prozessparameter an einen zentralen Steuerungsrechner weiter gegeben wird. Bei dem in der Fig.4 dargestellten Verfahrensschritt kann durch das Entlüftungselement 13 überschüssiger Kleber 16 austreten, im Wesentlichen werden jedoch mittels einer Vakuum - Absaugvorrichtung 23 sich in diesem Bereich ansammelnde Luftblasen abgesaugt.

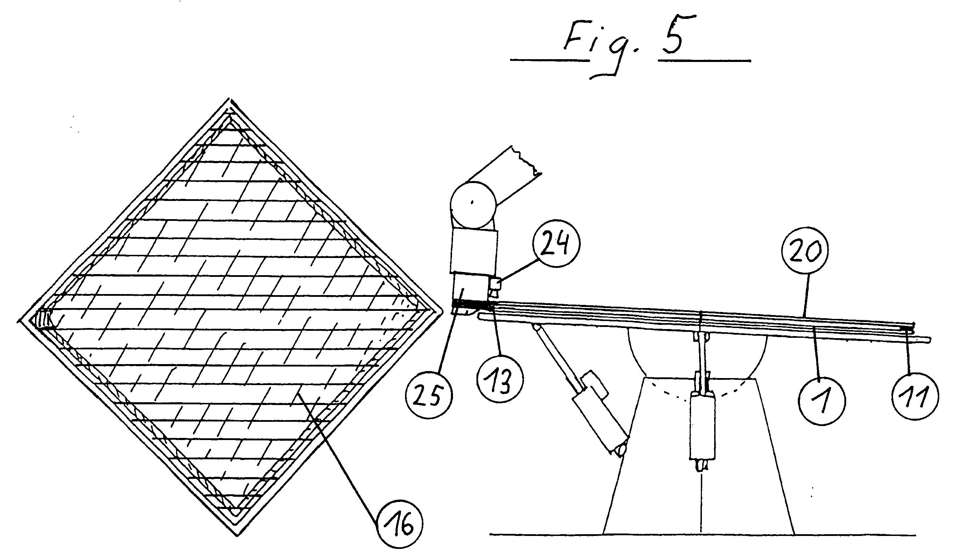

Der Fig.5 liegt eine Darstellung des Entlüftungsvorgangs zugrunde, der Kleber 16 ist verteilt (gekreuzte Schraffierung ). Hier ist im Wesentlichen die Verschließ - Vorrichtung 25 für die Entlüftung dargestellt der ein Prozessüberwachungs - Sensor 24 zugeordnet ist. Die Art der Verschließvorrichtung 25 richtet sich dabei nach der Ausführung des Lüftungselements 13. Entscheidend ist das Material aus dem das Lüftungselement 13 besteht. So kann thermoplastisches Material verschmolzen werden, metallisches Material kann verlötet werden. In besonderen Fällen können mehrere Entlüftungselemente 13 nebeneinander und / oder übereinander angeordnet sein. Hierbei spielt natürlich auch die flächenmäßige Größe der jeweiligen Glasplatten 1,20 eine große Rolle. Die Butylbarriere 11 hat in diesem Stadium ihre endgültige Dicke und Ausdehnung erreicht.

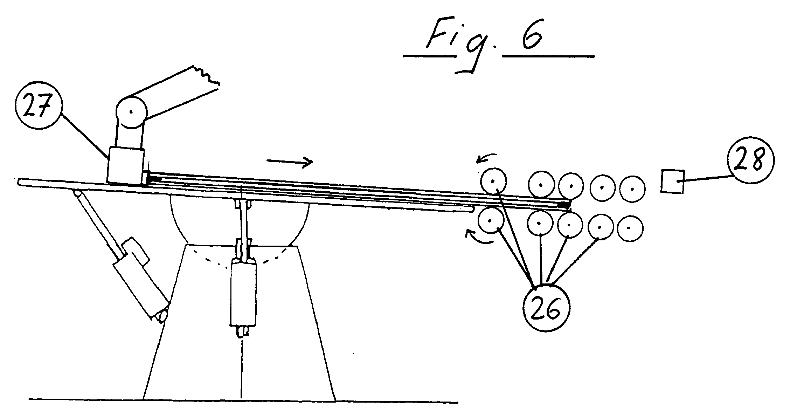

Die Fig.6 zeigt eine Darstellung des Abtransports des Fertigprodukts.

Die Schiebeeinrichtung 27 schiebt die verbundenen Glasplatten 1,20 von der Schwenktischplatte 12 in den Bereich der Transport - und Pressrollen 26. Gleichzeitig wird die Schwenktischplatte 12 gereinigt. Der Qualitäts - Kontrollsensor 28 überwacht das verklebte Produkt hinsichtlich der vom jeweiligen Anwender gewünschten Kriterien.

Die komplexe Steuerung der beschriebenen Bewegungsabläufe erfordert ein spezielles Steuerprogramm.

### Bezugszeichenliste

- (1): Glasplatte (beschichtet)
- (2): Montagekopf für das Lüftungselement
- (3): Kamera zur Überwachung des Butylauftrags
- (4): Butylauftragskopf
- (5): Temperatursensor
- (6): Hauptlager für den Schwenktisch
- (7): Tischsockel
- (8): Schwenkantrieb mit Hubspindel
- (9): Neigungssensor
- (10): Feuchtigkeitssensor
- (11): Butylbarriere
- (12): Schwenktischplatte mit Fixiervorrichtung
- (13): Entlüftungselement
- (14): Prozesskontroll - Sensor für Kleberauftrag
- (15): Kleber - Dosier und Auftragskopf
- (16): Kleber
- (17): Ultraschallerzeuger
- (18): Deckplattengreifer, Plattengreifer
- (19): Kantendetektor
- (20): Deckplatte (Glas)
- (21): Greifervorrichtung
- (22): Ultraschall - Mess-Sensor (Detektion der Klebeschicht)
- (23): Vakuum - Absaugeinrichtung
- (24): Prozessüberwachungs - Sensor für den Entlüftungsverschluß
- (25): Verschließ - Vorrichtung für die Entlüftung
- (26): Transport - und Pressrollen
- (27): Schiebeeinrichtung mit Reinigungseinheit für den Schwenktisch
- (28): Qualitäts - Kontrollsensor

## Patentansprüche

1. Vorrichtung zum blasenfreien Verkleben großflächiger beschichteter Glasplatten mit einer abdeckenden weiteren Glasplatte unter Reinraumbedingungen in einem fortlaufenden automatischen Herstellungsprozess mit den folgenden Merkmalen:
a) einer Schwenktischplatte (12) mit einer Fixiervorrichtung zur Aufnahme einer Glasplatte (1),
b) einem Butylauftragskopf (4) mit einer Kamera (3) zur Überwachung, wobei mittels eines Montagekopfes (2) mindestens ein Lüftungselemente (13) installiert wird,
c) einem Kleber-Dosier und Auftragskopf (15) mit einem Prozesskontroll-Sensor (14) für den Kleberauftrag,
d) einer Greifvorrichtung (21) mit einem Deckplattengreifer (18) zur Aufnahme einer Deckplatte (20),
e) einem Ultraschallerzeuger (17) und einem Ultraschall-Mess-Sensor (22) zur Unterstützung des Klebeprozesses,
f) einer Vakuum-Absaugeinrichtung (23) und einer Verschließ-Vorrichtung (25) für die Entlüftung.

2. Vorrichtung nach Anspruch 1
**dadurch gekennzeichnet,**
**dass** sie zur Herstellung von Solarmodulen verwendet wird.

3. Vorrichtung nach einem der Ansprüche 1 oder 2,
**dadurch gekennzeichnet,**
**dass** ein Magazin mit unterschiedlich großen Plattengreifern, bzw. Deckplattengreifern (18) vorgesehen ist.

4. Vorrichtung nach einem der Ansprüche 1 bis 3,
**dadurch gekennzeichnet,**
**dass** ein Temperatursensor (5) und/oder ein Feuchtigkeitssensor (10) zur Erfassung grundlegender Betriebsparameter vorgesehen ist.

5. Verfahren zum blasenfreien Verkleben großflächiger beschichteter Glasplatten mit einer abdeckenden weiteren Glasplatte unter Reinraumbedingungen in einem fortlaufenden automatischen Herstellungsprozess von Solarmodulen mit den folgenden Merkmalen:
a) eine erste Glasplatte (1) wird mittels einer Greifvorrichtung (21) und eines Plattengreifers (18) auf eine Schwenktischplatte (12) verbracht und diagonal in Richtung ihrer Längsachse fixiert,
b) mittels eines Butylauftragskopfes (4) wird an den Längskanten der Glasplatte (1) eine Raupe aus Butyl aufgetragen, wobei dieser Vorgang von einer Kamera (3) gesteuert, bzw. überwacht wird und an einem Endpunkt der längs der Schwenktischplatte (12) verlaufenden Diagonalen der Glasplatte (1) wird mindestens ein Entlüftungselement (13) installiert,
c) die Schwenktischplatte (12) wird quer zur Längsachse so verkippt, dass das Entlüftungselement (13) höher liegt als das gegenüber liegende andere Ende der Diagonale der Glasplatte (1),
d) daraufhin wird mittels eines Kleber-Dosier- und Auftragskopfes (15) Kleber (16) auf der Oberfläche der Glasplatte soweit aufgetragen, bis die Oberfläche des Klebers (16) die Unterkante des Lüftungselements (13) erreicht,
e) weiter wird von der Greifvorrichtung (21) mit dem Deckplattengreifer (18) eine passende Deckplatte (20) auf die Glasplatte (1) schräg aufgesetzt und dann unter Verkleinerung des Aufsetzwinkels auf die Glasplatte (1) zubewegt, wobei dieser Vorgang an der Spitze der Diagonale der Glasplatte (1) beginnt, die dem Lüftungselement (13) gegenüber liegt und mittels einer Vakuum-Absaugeinrichtung (23) zunehmend dem Lüftungselement (13) Luft entzogen wird, wobei mittels eines Ultraschallerzeugers (17) und eines Ultraschall-Mess-Sensors (22) der Klebeprozess unterstützt wird,
f) nach Beendigung dieses Vorgangs wird das Lüftungselement (13) luftdicht verschlossen und es werden die mittels des Klebers (16) verbundenen Glasplatten (1, 20) mittels des Einsatzes von Transport-und Pressrollen weiter befördert.

6. Verfahren nach Anspruch 5,
**dadurch gekennzeichnet,**
**dass** mittels der Verwendung von Transport- und Pressrollen (26) die Glasplatten (1, 20) verpresst und weiterbefördert werden.

7. Verfahren nach einem der Ansprüche 5 oder 6,
**dadurch gekennzeichnet,**
**dass** in Abhängigkeit von der flächenmäßigen Größe der zu verklebenden Glasplatten unterschiedlich große Plattengreifer bzw. Deckplattengreifer (18) einem Magazin entnommen werden und mittels mindestens zweier Kantendetektoren (19) auf der Schwenktischplatte (12) diagonal ausgerichtet werden.

8. Verfahren nach einem der Ansprüche 5 bis 7,
**dadurch gekennzeichnet,**
**dass** ein Temperatursensor (5) und/oder ein Feuchtigkeitssensor (10) zur Erfassung grundlegender Betriebsparameter vorgesehen ist.

## Claims

1. Device for the bubble-free bonding of large-surface coated glass panes, under clean room conditions, to a covering further glass pane in a continuous automatic production process, with the following features:
a) a pivoting bench plate (12) with a fixing device for receiving a glass pane (1),
b) a butyl applicator head (4) with a camera (3) for monitoring, at least one aeration element (13) being installed by means of a mounting head (2),
c) an adhesive metering and applicator head (15) with a process control sensor (14) for adhesive application,
d) a gripping device (21) with a cover pane gripper (18) for receiving a cover pane (20),
e) an ultrasound generator (17) and an ultrasound measurement sensor (22) for assisting the adhesive process,
f) a vacuum suction device (23) and a closing device (25) for deaeration.

2. Device according to Claim 1, **characterized in that** it is used for producing solar modules.

3. Device according to either one of Claims 1 and 2, **characterized in that** a magazine with pane grippers or cover pane grippers (18) of different size is provided.

4. Device according to one of Claims 1 to 3, **characterized in that** a temperature sensor (5) and/or a moisture sensor (10) for detecting basic operating parameters are/is provided.

5. Method for the bubble-free bonding of large-surface coated glass panes, under clean room conditions, to a covering further glass pane in a continuous automatic production process of solar modules, with the following features:
a) a first glass pane (1) is brought by means of a gripping device (21) and a pane gripper (18) onto a pivoting bench plate (12) and is fixed diagonally in the direction of its longitudinal axis,
b) a bead of butyl is applied to the longitudinal edges of the glass pane (1) by means of a butyl applicator head (4), this operation being controlled or monitored by a camera (3), and at least one deaeration element (13) is installed at an end point of the diagonal, running along the pivoting bench plate (12), of the glass pane (1),
c) the pivoting bench plate (12) is tilted transversely to the longitudinal axis such that the deaeration element (13) lies higher than the opposite other end of the diagonal of the glass pane (1),
d) thereupon, adhesive (16) is applied to the surface of the glass pane by means of an adhesive metering and applicator head (15), until the surface of the adhesive (16) reaches the lower edge of the aeration element (13),
e) further, a matching cover pane (20) is placed obliquely onto the glass pane (1) by the gripping device (21) by means of the cover pane gripper (18) and is then moved toward the glass pane (1), with the putting-in-place angle being reduced, this operation commencing at the tip of the diagonal of the glass pane (1) which lies opposite the aeration element (13), and air being extracted increasingly from the aeration element (13) by means of a vacuum suction device (23), wherein the adhesive process is assisted by means of an ultrasound generator (17) and an ultrasound measurement sensor (22),
f) after the end of this operation, the aeration element (13) is closed, air-tight, and the glass panes (1, 20) connected by means of the adhesive (16) are conveyed further on by the use of transporting and pressing rollers.

6. Method according to Claim 5, **characterized in that** the glass panes (1, 20) are pressed and conveyed further on by the use of transporting and pressing rollers (26).

7. Method according to either one of Claims 5 and 6, **characterized in that** pane grippers or cover pane grippers (18) of different size, depending on the surface size of the glass panes to be bonded, are extracted from a magazine and are oriented diagonally on the pivoting bench plate (12) by means of at least two edge detectors (19).

8. Method according to one of Claims 5 to 7, **characterized in that** a temperature sensor (5) and/or a moisture sensor (10) for detecting basic operating parameters are/is provided.

## Revendications

1. Ensemble pour coller sans bulles des plaques de verre revêtues sur une grande partie de leur surface sur autres plaques de verre qui les recouvrent, dans une opération de fabrication se déroulant automatiquement dans des conditions de local propre, l'ensemble présentant les caractéristiques suivantes :
a) un plateau (12) de table pivotante présentant un ensemble de fixation qui reprend une plaque de verre (1),
b) une tête (4) d'application de butyle dotée d'une caméra (3) de surveillance, au moins un élément de ventilation (13) étant installé au moyen d'une tête de montage (2),
c) une tête (15) de dosage et d'application d'adhésif dotée d'un capteur (14) de contrôle de l'opération d'application d'adhésif,
d) un ensemble de saisie (21) doté d'un dispositif de saisie (18) de plaque de recouvrement qui reprend une plaque de recouvrement (20),
e) un générateur d'ultrasons (17) doté d'un capteur (22) de mesure d'ultrasons qui soutient l'opération de collage et
f) un dispositif (23) d'aspiration sous vide et un ensemble (25) de fermeture de l'évacuation d'air.

2. Ensemble selon la revendication 1, **caractérisé en ce qu'**il est utilisé pour la fabrication de modules solaires.

3. Ensemble selon l'une des revendications 1 ou 2, **caractérisé en ce qu'**il présente un magasin présentant des dispositifs de saisie de plaque ou des dispositifs (18) de saisie de plaque de recouvrement de différentes tailles.

4. Ensemble selon l'une des revendications 1 à 3, **caractérisé en ce qu'**il présente un capteur de température (5) et/ou un capteur d'humidité (10) qui saisissent des paramètres fondamentaux du fonctionnement.

5. Procédé de collage sans bulles de plaques de verre, revêtues sur une grande partie de leur surface, sur une autre plaque de verre qui les recouvre, dans une opération de fabrication de modules solaires se déroulant automatiquement dans des conditions de local propre, le procédé présentant les caractéristiques suivantes :
a) une première plaque de verre (1) est placée au moyen d'un ensemble de saisie (21) et d'un dispositif (18) de saisie de plaque sur un plateau (12) de table pivotante et est fixé diagonalement dans la direction de son axe longitudinal,
b) au moyen d'une tête (4) d'application de butyle, un cordon de butyle est appliqué sur les bords longitudinaux de la plaque de verre (1), cette opération étant commandée ou surveillée par une caméra (3) et au moins un élément (13) d'évacuation d'air étant installé en un point final de la diagonale de la plaque de verre (1) qui s'étend le long du plateau (12) de table pivotante,
c) le plateau (12) de table pivotante est incliné transversalement par rapport à l'axe longitudinal de telle sorte que l'élément (13) d'évacuation d'air soit situé plus haut que l'autre extrémité opposée de la diagonale de la plaque de verre (1),
d) ensuite, l'adhésif (16) est appliqué sur la surface de la plaque de verre au moyen d'une tête (15) de dosage et d'application d'adhésif jusqu'à ce que la surface de l'adhésif (16) atteigne le bord inférieur de l'élément (13) d'évacuation d'air,
e) ensuite, à l'aide du dispositif (18) de saisie de plaque de recouvrement, l'ensemble de saisie (21) applique obliquement une plaque de recouvrement (20) adaptée sur la plaque de verre (1) et, par diminution de l'angle d'application, l'approche de la plaque de verre (1), cette opération commençant au sommet de la diagonale de la plaque de verre (1) opposé à celui où est situé l'élément (13) d'évacuation d'air, l'air étant extrait progressivement de l'élément (13) d'évacuation d'air au moyen d'un dispositif (23) d'aspiration sous vide, l'opération de collage étant soutenue au moyen d'un générateur d'ultrasons (17) et d'un capteur (22) de mesure d'ultrasons et
f) lorsque cette opération est terminée, l'élément (13) d'évacuation d'air est fermé hermétiquement et les plaques de verre (1, 20) reliées au moyen de l'adhésif (16) sont transportées plus loin par recours à des rouleaux de transport et de poussée.

6. Procédé selon la revendication 5, **caractérisé en ce que** les plaques de verre (1, 20) sont comprimées et transportées par recours à des rouleaux (26) de transport et de poussée.

7. Procédé selon l'une des revendications 5 ou 6, **caractérisé en ce qu'**en fonction de la taille de la surface des plaques de verre à coller, des dispositifs de saisie de plaque ou des dispositifs (18) de saisie de plaque de recouvrement de tailles différentes sont repris dans un magasin et sont alignés en diagonale sur la plaque (12) de la table pivotante au moyen d'au moins deux détecteurs de bord (19).

8. Procédé selon l'une des revendications 5 à 7, **caractérisé en ce qu'**un capteur de température (5) et/ou un capteur d'humidité (10) sont prévus pour saisir des paramètres fondamentaux du fonctionnement.
